Europäisches Patentamt

European Patent Office

Office européen des brevets

(11) Publication number: **0 144 214**
**B1**

(12) **EUROPEAN PATENT SPECIFICATION**

(45) Date of publication of patent specification: **22.08.90**  (51) Int. Cl.⁵: **A 01 D 34/74**

(21) Application number: **84308292.6**

(22) Date of filing: **29.11.84**

(54) Powered grass cutter vehicle with height of cut indicator.

(30) Priority: **30.11.83 JP 184750/83**

(43) Date of publication of application:
**12.06.85 Bulletin 85/24**

(45) Publication of the grant of the patent:
**22.08.90 Bulletin 90/34**

(84) Designated Contracting States:
**DE FR GB**

(56) References cited:
**FR-A-2 082 264**
**GB-A- 779 836**
**GB-A-2 049 386**
**US-A-3 396 519**
**US-A-3 672 137**
**US-A-4 106 269**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Amano, Akira**
**1-18-30, Oyamadai**
**Shinagawa-ku Tokyo (JP)**
Inventor: **Sasaki, Kazuhiko**
**1-7-23, Higashi**
**Okegawa-shi Saitama (JP)**

(74) Representative: **Leale, Robin George et al**
**FRANK B. DEHN & CO. Imperial House 15-19**
**Kingsway**
**London WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a powered grass cutter vehicle having a grass cutting height indicator.

Grass cutting height adjusting devices are known, for example from U.S. Patents Nos. 3,234,719 and 3,245,209, in which a single adjustment lever located adjacent to an operator's station or seat is operatively coupled by a linkage mechanism to a cutter unit suspended underneath a vehicle body, for varying the height of the cutter unit relative to the ground. These known adjusting devices are advantageous in that they can be operated with ease, since a desired grass cutting height can be set with the single adjustment lever. However, an adjusted grass cutting height cannot easily be confirmed accurately by the operator, since it is left primarily to the experience and skill of the operator to check this by reference to the inclination of the adjustment lever. With this problem in view, it is an object of the present invention to provide an improved grass cutting height indicator in a powered grass cutter vehicle for enabling the operator while sitting on the operator's seat readily to confirm the grass cutting height.

Other known arrangements are disclosed in DE-A-2111255 and US-A-3672137. US-A-3672137 discloses the preamble of claim 1, however in this arrangement it is still not easy for an operator to check the cutting height.

Accordingly the present invention is characterised in that an indicator member is mounted on said first support shaft for angular movement with said first arm and bears indicia related to different heights of cut, and in that a viewing window is provided in a part of the vehicle body adjacent the operator's seat, the indicia on said indicator member being at least partly visible to the operator through said window.

An embodiment of the invention will now be described by way of example and with reference to the accompanying drawings, in which:-

FIG. 1 is a schematic side elevational view of a powered grass cutter vehicle incorporating grass cutting height adjusting means according to an embodiment of the invention;

FIG. 2 is an enlarged perspective view of a linkage mechanism of the said grass cutting height adjusting means;

FIG. 3 is a fragmentary perspective view of relevant parts of the vehicle, showing an operator's seat and adjacent parts; and

FIG. 4 is detailed sectional view of an adjusting lever of the said adjusting means.

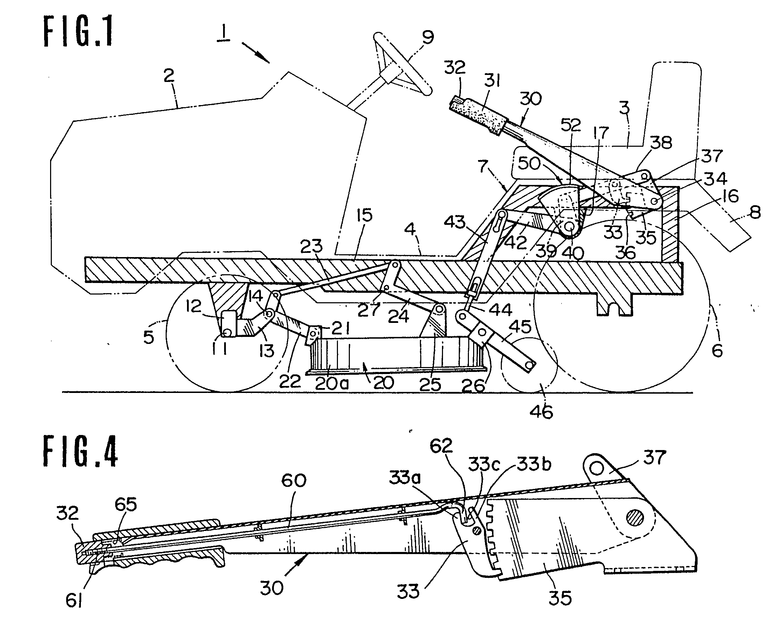

FIG. 1 shows a powered grass cutter vehicle in the form of a lawn mower and tractor combination, or a riding lawn mower, including a tractor vehicle 1 indicated by ghost lines. The tractor 1 has an engine (not shown) mounted on a front portion of a tractor body and enclosed by an engine cover 2. An operator's station including a seat 3 is located at a rear portion of the tractor body, with a floor 4 extending forwardly from the seat 3. A pair of steerable front wheels 5 are rotatably mounted on the front portion of the tractor body, and a pair of rear drive wheels 6 are mounted on the rear portion thereof. A pair of rear wings 8 (only one shown) are integral with a body cover 7 and extend laterally from a cover portion beneath the seat 3 in overhanging relation to the rear wheels 6. A steering wheel 9 is rotatably mounted on the tractor body and operatively coupled to the front wheels 5.

A lawn mower or cutter unit 20 is suspended from the floor 4 through a link mechanism and includes a housing 20a accommodating therein a number of mower blades mounted on a vertical shaft for rotation in a horizontal plane. The vertical shaft is rotated by a belt-and-pulley mechanism operatively connected to a mower output shaft of the engine.

A bell crank arm 22 is pivotably connected at one end to a bracket 21 mounted on an upper front edge of the housing 20a of the lawn mower unit 20. The bell crank arm 22 has an intermediate angular portion pivotally supported by a pin 14 on a bracket 13 extending rearwardly from a frame 12 in which a front wheel axle 11 is journalled. The bell crank arm 22 has its other end pivotally connected to a forward end of a rod 23 whose rear end is pivotally connected to an end of a bell crank arm 24. The other end of the bell crank arm 24 is pivotally connected to a bracket 25 mounted on the housing 20a near a rear end thereof. The bell crank arm 24 has an intermediate angular portion pivotally supported by a pin 27 on a main frame 15 below the floor 4. A parallel link mechanism as above described is provided at each of two laterally spaced positions below the tractor body.

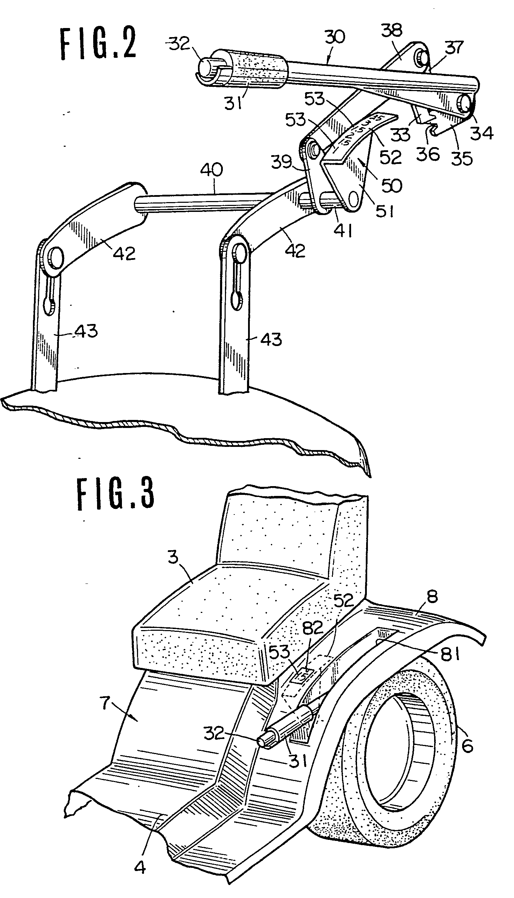

An adjusting lever 30 which is inclined upwardly and forwardly is positioned on one side of the operator's seat 3. The adjusting lever 30 comprises a pipe mounted on a subframe 16 below the seat 3 for angular movement in a vertical plane. The lever 30 has an integral support shaft 34 to which there is fixed an arm 37 having its distal end directed forwardly and upwardly. A sector gear 35 with its teeth 36 facing forwardly is supported at its centre bearing on the support shaft 34 in fixed relation to the subframe 16. As illustrated in FIG. 3, the adjusting lever 30 includes a grip 31 projecting out of a slot 81 defined in one of the rear wings 8, and a resiliently-biased push knob 32 is disposed in the distal end of the grip 31 and is operatively coupled to a pawl 33 pivotally disposed in a lower portion of the lever 30. The pawl 33 is normally held in meshing engagement with the teeth 36 of the sector gear 35. When the push knob 32 is pushed in, the pawl 33 is caused to swing forwardly and be released out of mesh with the teeth 36.

More specifically, and as clearly shown in FIG. 4, the adjusting lever 30 has a rod 60 extending axially therein with the push knob 32 coupled to one end 61 of the rod 60. The rod 60 is thus axially movable with the push knob 32. The rod 60 has its opposite end 62 bent laterally into engagement with the pawl 33. The pawl 33 has a bifurcated end composed of legs 33a, 33b spaced from each other by a recess 33c in which the end 62 of the rod 60 is disposed so as normally to engage with the leg 33a, whereby the pawl 33 is biased into meshing engagement with the sector-shaped gear 35 under the force of a spring 65 disposed in the lever 30 below the push knob 32. When the push knob 32 is depressed, the end 62 of the rod 60 pushes the leg 33b of the pawl 33 to turn the latter out of meshing engagement with the sector-shaped gear 35.

A link 38 is pivotally connected at its rear end to the aforementioned distal end of the arm 37 and at its front end to an upper end of an arm 39 extending parallel to the arm 37. The lower end of the arm 39 is pivotally supported on a stay 17, fixed to the subframe 16, by means of a support shaft 40 which is secured to the arm 39 and extends transversely of the tractor body. To the support shaft 40 are secured a pair of arms 42 with their distal ends directed forwardly. To the distal ends of the arms 42 are pivotally coupled links 43 having their lower ends pivotally connected by joint rods 44 to the upper ends of arms 45, only one of which is shown in FIG. 1.

The arms 45 have intermediate portions thereof pivotally connected to brackets 26 mounted on the rear end of the housing 20a of the lawn mower unit 20. The arms 45 are inclined forwardly and upwardly, and carry at their lower ends a pair of ground-engaging wheels 46, only one of which is shown in FIG. 1.

In operation, the ground-engaging wheels 46 are held in contact with ground while cutting grass. The operator, while sitting on the seat 3, manipulates the adjusting lever 30 to bring the pawl 33 into mesh with different teeth 35 thereby causing the linkage mechanism operatively coupled to the lever 30 to vary the height of the rear end of the lawn mower unit 20 as the arms 45 turn about the axis of the wheels 46. As a result, the lawn mower unit 20 is moved vertically and obliquely while being kept substantially horizontal by means of the parallel link mechanism 21, 22, 23, 24, 25, and is thus set to a desired height from the ground. The unit 20 has its front end slightly lower than its rear end, but is in fact substantially horizontal since it is inclined at only about 0.5° to the ground.

Thus, grass can be cut at a desired cutting height by the mower blades disposed in the housing 20a.

One component of the linkage mechanism of the grass cutting height adjusting device, that is the support shaft 40 extending transversely of the tractor body, has an axial extension 41 projecting laterally below the adjusting lever 30 and having an indicator member 50 secured thereto. As shown in FIG. 2, the indicator member 50 comprises a substantially vertical sector-shaped base plate 51 and an arcuate indicator panel 52 extending laterally along an outer arcuate edge of the plate 51. The sector-shaped base plate 51 has a lower centre bearing secured to the end of the axial extension 41 of the support shaft 40. The indicator panel 52 is disposed below and close to the underneath surface of the rear wing 8 on one side of the operator's seat 3. The indicator panel 52 bears indicia in the form of numerals or symbols 53 representing different grass cutting heights and corresponding to positions in which the pawl 33 meshes with the sector gear 35, the numerals or symbols 53 being graduated at intervals of 0.5 cm or 1.0 cm. The rear wing 8 below which the indicator panel 52 is disposed has an indicator window 82 for the operator to see, one at a time, the numerals or symbols respresenting different grass cutting heights.

Thus in this embodiment of the present invention, as described above, the indicator member 50 which is movable in unison with the linkage mechanism is disposed in the vicinity of the adjusting lever 30 located on one side of the operator's seat 3, and the rear wing 8 has the indicator window 82 for the operator to see the indicator panel 52. Thus the operator, whilst sitting on the seat 3, can easily confirm a grass cutting height simply by viewing the indicator panel 52 near the adjusting lever 30.

**Claims**

1. A powered grass cutter vehicle (1) having an operator's seat (3) thereon, with means for adjusting the height of cut and indicating the same to an operator, comprising: an adjusting lever (30) disposed in the vicinity of the operator's seat (3), a cutter unit (20) suspended under the vehicle (1), a linkage mechanism (37, 38, 39, 40, 42, 43, 44, 45) between said adjusting lever (30) and said cutter unit (20) to enable the cutter unit (20) to be raised and lowered by means of the lever (30), including a first arm (39) pivotally supported by a first support shaft (40) on the vehicle frame and operatively coupled to said adjusting lever (30), characterised in that an indicator member (50) is mounted on said first support shaft (40) for angular movement with said first arm (39) and bears indicia (53) related to different heights of cut, and in that a viewing window (82) is provided in a part of the vehicle body adjacent the operator's seat (3), the indicia (53) on said indicator member (50) being at least partly visible to the operator through said window (82).

2. A vehicle according to claim 1, wherein said indicator member (50) comprises a sector-shaped plate (51) having a centre bearing supported on said first support shaft (40), said indicia (53) being located on an outer arcuate edge (52) of said sector-shaped plate (51).

3. A vehicle according to claim 1 or 2, wherein said adjusting lever (30) is pivotally supported by a second support shaft (34) on the vehicle frame, said linkage mechanism including a second arm (37) mounted on said second support shaft (34) for angular movement with said adjusting lever (30) and operatively coupled to said first arm (39) in substantially parallel relation thereto, a sector gear (35) having a centre bearing supported by said second support shaft (34) in fixed relation to said vehicle frame, a pawl (33) pivotally coupled to said adjusting lever (30) and normally urged in a direction to mesh with said sector gear (35), and a control member (32) mounted on said adjusting lever (30) for releasing said pawl (33) from meshing engagement with said sector gear (35).

4. A vehicle according to claim 3, wherein said linkage mechanism further comprises a third arm (42) mounted on said first support shaft (40) for angular movement with said first arm (39), and a fourth arm (45) pivotably supported on said cutter unit (20) and having a ground-engaging wheel (46) on a lower end thereof, said fourth arm (45) being connected to said third arm (42) in such manner that said fourth arm (45) is angularly movable about the axis of said ground-engaging wheel (46) in response to angular movement of said third arm (42), to raise and lower said cutter unit (20).

5. A vehicle according to any preceding claim, wherein the said cutter unit (20) is suspended by means of a mechanism comprising a pair of bell crank arms (22, 24) having ends operatively interconnected by a link (23), intermediate angular portions pivotally supported on said vehicle frame, and opposite ends pivotally connected to front and rear parts, respectively, of said cutter unit (20), whereby said cutter unit (20) is maintained substantially horizontal when it is raised and lowered.

## Patentansprüche

1. Angetriebenes Grasschneidefahrzeug (1), aufweisend einen Bedienungspersonensitz (3) darauf mit einer Einrichtung zur Einstellung der Schnitthöhe und deren Anzeige zu einer Bedienungsperson, umfassend: einen in der Nähe des Bedienungspersonensitzes (3) angeordneten Einstellhebel (30), eine unter dem Fahrzeug (1) aufgehängte Schneideinheit (20), einen Gestängemechanismus (37, 38, 39, 40, 42, 43, 44, 45) zwischen dem Einstellhebel (30) und der Schneideinheit (20) zum Ermöglichen, daß die Schneideinheit (20) mittels des Hebels (30) angehoben und abgesenkt wird, enthaltend einen ersten Arm (39), der mittels einer ersten Stützwelle (40) am Fahrzeugrahmen schwenkbar gehalten und funktionsmäßig mit dem Einstellhebel (30) gekoppelt ist, dadurch gekennzeichnet, daß an der ersten Stützwelle (40) ein Anzeigeelement (50) zur Winkelbewegung mit dem ersten Arm (39) angebracht ist und mit verschiedenen Schnitthöhen in Beziehung stehende Kennzeichen (53) trägt und daß ein Sichtfenster (82) in einem Teil der Fahrzeugkarosserie benachbart den Bedienugspersonensitz (3) vorgesehen ist, wobei das Kennzeichen (53) auf dem Anzeigeelement (50) für die Bedienungsperson durch das Fenster (82) wenigstens teilweise sichtbar ist.

2. Fahrzeug nach Anspruch 1, bei dem das Anzeigeelement (50) eine sektorförmige Platte (51) umfaßt, aufweisend ein auf der ersten Stützwelle (40) gehaltertes Mittenlager, wobei die Kennzeichen (53) auf einer äußeren gekrümmten Kante (52) der sektorförmigen Platte (51) angeordnet sind.

3. Fahrzeug nach Anspruch 1 oder 2, bei dem der Einstellhebel (30) mittels einer zweiten Stützwelle (34) am Fahrzeugrahmen schwenkbar gehaltert ist, wobei der Gestängemechanismus einen zweiten Arm (37), der an der zweiten Stützwelle (34) zur Winkelbewegung mit dem Einstellhebel (30) angebracht ist und funktionsmäßig mit dem ersten Arm (39) auf im wesentlichen parallele Beziehung gekoppelt ist, wobei ein Sektorzahnrad (35) ein von der zweiten Stützwelle (34) in fester Beziehung zum Fahrzeugrahmen gehaltertes Mittenlager aufweist, eine schwenkbar mit dem Einstellhebel (30) gekoppelte und gewöhnlich in der Richtung zum Ineinandergreifen mit dem Sektorzahnrad (35) gedrückte Sperrklinke (33) und ein Steuerglied (32) enthält, das auf dem Einstellhebel (30) zur Freigabe der Sperrklinke (33) aus dem ineinandergreifenden Eingriff mit dem Sektorzahnrad (35) angebracht ist.

4. Fahrzeug nach Anspruch 3, bei dem der Gestängemechanismus weiter einen dritten Arm (42), der auf der ersten Stützwelle (40) zur Winkelbewegung mit dem ersten Arm (39) angebracht ist, und einen vierten Arm (45) umfaßt, der auf der Schneideinheit (20) schwenkbar gehaltert ist und ein Bodeneingriffsrad (46) an seinem einen unteren Ende aufweist, wobei der vierte Arm (45) mit dem dritten Arm (42) auf solche Weise verbunden ist, daß der vierte Arm (45) winkelmäßig um die Achse des Bodeheingriffsrades (46) ansprechend auf eine Winkelbewegung des dritten Arms (42) bewegbar ist, um die Schneideinheit (20) anzuheben und abzusenken.

5. Fahrzeug nach einem beliebigen vorhergehenden Anspruch, bei dem die Schneideinheit (20) mittels eines Mechanismus aufgehängt ist, umfassend ein Paar von Glockenkurbelarmen (22, 24), die funktionsmäßig mittels einer Verbindung (23) verbundene Enden, schwenkbar auf dem Fahrzeugrahmen gehalterte Winkelzwischenabschnitte und jeweils mit voderen und rückwärtigen Teilen der Scnheideinheit (20) schwenkbar verbundene Enden aufweisen, wodurch die Schneideinheit (20) im wesentlichen horizontal gehaltert ist, wenn sie angehoben und abgesenkt wird.

## Revendications

1. Faucheuse (1) à gazon à moteur ayant un siège (3). pour un opérateur, comportant un dispositif de réglage de la hauteur de coupe et indiquant celle-ci à un opérateur, comprenant un levier de réglage (30) placé à proximité du siège (3) de l'opérateur, un ensemble de coupe (20) suspendu sous la faucheuse (1), et un mécanisme à tringlerie (37, 38, 39, 40, 42, 43, 44, 45) placé entre le levier de réglage (30) et l'ensemble de coupe (20) afin qu'il permette le soulèvement et l'abaissement de l'ensemble de coupe (20) à l'aide du levier (30), et comprenant un premier bras (39) supporté de manière articulée par un premier arbre de support (40) sur le châssis de la faucheuse et couplé au levier de réglage (30), caractérisée en ce qu'un organe indicateur (50) est monté sur le premier arbre de support (40) afin qu'il se déplace angulairement avec le premier bras (39), et il porte des signes (53) reliés aux différentes hauteurs de coupe, et en ce qu'une fenêtre (82) d'observation est réalisée dans une partie de la carrosserie du véhicule près du siège (3) de l'opérateur, les signes (53) portés par l'organe indicateur (50) étant visibles au moins partiellement à travers la fenêtre (82) par l'opérateur.

2. Faucheuse selon la revendication 1, dans laquelle l'organe indicateur (50) comporte une plaque (51) en forme de secteur dont le centre est supporté par le premier arbre de support (40), les signes (53) étant disposés à un bord courbe externe (52) de la plaque en forme de secteur (51).

3. Faucheuse selon la revendication 1 ou 2, dans laquelle le levier de réglage (30) est supporté de manière articulée par un second arbre de support (34) sur le châssis de la faucheuse, le mécanisme à tringlerie comprenant un second bras (37) monté sur le second arbre de support (34) afin qu'il se déplace angulairement avec le levier de réglage (30) et couplé au premier bras (39) en étant pratiquement parallèle à celui-ci, un secteur denté (35) dont le centre est supporté par le second arbre de support (34) en position fixe par rapport au châssis de la faucheuse, un cliquet (33) couplé sous forme articulée au levier de réglage (30) et normalement rappelé dans le sens qui le met en prise avec le secteur denté (35), et un organe de commande (32) monté sur le levier de réglage (30) et destiné à libérer le cliquet (33) de sa coopération avec le secteur denté (35).

4. Faucheuse selon la revendication 3, dans laquelle le mécanisme à tringlerie comporte en outre un troisième bras (42) monté sur le premier arbre de support (40) afin qu'il se déplace angulairement avec le premier bras (39), et un quatrième bras (45) supporté de manière articulée sur l'ensemble de coupe (20) et ayant une roue (46) de contact avec le sol à son extrémité inférieure, le quatrième bras (45) étant raccordé au troisième bras (42) de manière que le quatrième bras (45) soit mobile angulairement autour de l'axe de la roue (46) de contact avec le sol à la suite du déplacement angulaire du troisième bras (42), afin que l'ensemble de coupe (20) soit levé et baissé.

5. Faucheuse selon l'une quelconque des revendications précédentes, dans laquelle l'ensemble de coupe (20) est suspendu par un mécanisme comprenant deux bras coudés (22, 24) dont les extrémités sont reliées par une bielle (23), des parties intermédiaires coudées étant articulées sur le châssis de la faucheuse, et les extrémités opposées étant articulées sur les parties avant et arrière respectivement de l'ensemble de coupe (20), si bien que l'ensemble de coupe (20) est maintenu en position sensiblement horizontale lorsqu'il est levé et baissé.

FIG.1

FIG.4

EP 0 144 214 B1

FIG.2

FIG.3